# FASCICULE DE BREVET EUROPEEN

(11) **EP 4 540 074 B1**
(45) Date de publication et mention de la délivrance du brevet: **04.03.2026**
(21) Numéro de dépôt: 23732505.5
(22) Date de dépôt: 13.06.2023
(51) Int. Cl.: B60C 11/00, B60C 11/12, B60C 11/03

(54) **PNEUMATIQUE POUR UN VÉHICULE POIDS LOURD À DURÉE DE VIE AUGMENTÉE**
REIFEN FÜR EIN SCHWERLASTFAHRZEUG MIT ERHÖHTER LEBENSDAUER
TYRE FOR A HEAVY DUTY VEHICLE WITH INCREASED SERVICE LIFE

(30) Priorité: 16.06.2022 FR 2205879
(43) Date de publication de la demande: 23.04.2025
(73) Titulaire: COMPAGNIE GENERALE DES ETABLISSEMENTS MICHELIN, 63000 Clermont-Ferrand (FR)
(72) Inventeur: ROBIN, Xavier, 63040 CLERMONT-FERRAND CEDEX 09 (FR); BARDIN, Damien, 63040 CLERMONT-FERRAND CEDEX 09 (FR)
(74) Mandataire: M.F.P. Michelin
(86) Numéro de dépôt international: PCT/EP2023/065730
(87) Numéro de publication internationale: WO 2023/242159

(56) Documents cités:
- WO-A1-2013/083610
- WO-A1-2013/150143
- WO-A1-2018/158546
- WO-A1-2019/058084
- WO-A1-2019/092365
- JP-A- H01 317 807
- US-A1- 2015 314 650

## Description

La présente invention a pour objet un pneumatique pour un véhicule poids lourd et concerne plus particulièrement son sommet.

Dans ce qui suit, la direction circonférentielle ou longitudinale est la direction de rotation du pneumatique, la direction axiale ou transversale est la direction parallèle à l'axe de rotation du pneumatique et la direction radiale est une direction perpendiculaire à l'axe de rotation du pneumatique.

Le sommet d'un pneumatique comprend, radialement de l'extérieur vers l'intérieur, une bande de roulement en matériau caoutchoutique, une couche intermédiaire également en matériau caoutchoutique, et une armature de sommet ayant au moins une couche de sommet comprenant des renforts enrobés dans un matériau caoutchoutique.

La bande de roulement est la partie périphérique du pneumatique, destinée, lors de son entrée en contact avec un sol, par l'intermédiaire d'une surface de roulement, à être usée et à adhérer au sol. Elle comprend généralement une sculpture, constituée par des découpures séparant des éléments en relief et donc délimitées par deux parois de matériau caoutchoutique. Ces découpures peuvent être circonférentielles, axiales ou obliques. Par convention, par rapport à la direction circonférentielle du pneumatique, une découpure circonférentielle forme un angle moyen au plus égal à 30°, une découpure oblique forme un angle moyen compris entre 30° et 70° et une découpure axiale forme un angle moyen au moins égal à 70°.

La couche intermédiaire, radialement intérieure à la bande de roulement et en contact avec celle-ci, assure une liaison mécanique entre la bande roulement et l'armature de sommet. Elle protège en particulier l'armature de sommet des agressions extérieures, et plus particulièrement des agressions mécaniques générées par des corps étrangers pénétrant dans la bande de roulement.

L'armature de sommet comprend au moins une couche de sommet et, le plus souvent, une superposition radiale de couches de sommet s'étendant circonférentiellement, radialement à l'intérieur de la couche intermédiaire et en contact avec celle-ci, et radialement à l'extérieur d'une armature de carcasse, ladite armature de carcasse assurant le renforcement global du pneu. Une couche de sommet comprend des renforts, le plus souvent métalliques dans le cas d'un pneumatique pour véhicule poids lourd, et enrobés dans un matériau caoutchoutique.

Parmi les couches de sommet, on distingue usuellement les couches de protection, constituant une armature de protection la plus radialement extérieure, et les couches de travail, constituant une armature de travail radialement comprise entre l'armature de protection et l'armature de carcasse. En outre l'armature de sommet peut comporter une armature de frettage positionnée radialement à l'intérieur de l'armature de travail, entre deux couches de travail de l'armature de travail, ou radialement à l'extérieur de l'armature de travail.

L'armature de protection, comprenant au moins une couche de protection, protège essentiellement l'armature de travail des agressions mécaniques ou physico-chimiques, susceptibles de se propager à travers la bande de roulement radialement vers l'intérieur du pneumatique. Une couche de protection comprend généralement des renforts métalliques élastiques, parallèles entre eux et formant, avec la direction circonférentielle, des angles au moins égaux à 10°. Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa. Ces caractéristiques mécaniques sont déduites d'une courbe représentant la force de traction (en N), appliquée au renfort métallique, en fonction de son allongement relatif (en %), dite courbe force-allongement, conformément à la norme ISO 6892 de 1984.

L'armature de travail, comprenant généralement au moins deux couches de travail, a pour fonction de ceinturer le pneumatique et de conférer de la rigidité et de la tenue de route au pneumatique. Elle reprend à la fois les sollicitations mécaniques de gonflage, générées par la pression de gonflage du pneumatique et transmises par l'armature de carcasse, et les sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection. Une couche de travail comprend généralement des renforts métalliques non extensibles, parallèles entre eux et formant, avec la direction circonférentielle, des angles au plus égaux à 60°, et, de préférence, au moins égaux à 15° et au plus égaux à 45°. Un renfort métallique non extensible est caractérisé par un allongement total At, sous une force de traction égale à 10% de la force à rupture Fm, au plus égal à 0.2%. Par ailleurs, un renfort métallique non extensible a un module élastique en extension compris usuellement entre 150 GPa et 200 GPa. Ces caractéristiques mécaniques sont également déduites d'une courbe force-allongement telle que précédemment décrite.

L'armature de frettage, comprenant au moins une couche de frettage, a pour fonction de reprendre au moins en partie les sollicitations mécaniques de gonflage et donc de diminuer les sollicitations mécaniques de gonflage transmises à l'armature de travail. Elle contribue à une rigidification de l'armature de sommet, ce qui augmente l'endurance de l'armature de sommet, par rapport à une armature de sommet sans frettage. Une couche de frettage comprend des renforts métalliques, parallèles entre eux et formant, avec la direction circonférentielle, des angles au plus égaux à 10°, de préférence au plus égaux à 5° et encore plus préférentiellement égaux à 0°.

Le sommet du pneumatique précédemment décrit est relié au niveau de deux extrémités axiales à deux flancs, eux-mêmes respectivement reliés à deux bourrelets, lesdits bourrelets assurant la liaison mécanique entre le pneumatique et la jante sur laquelle le pneumatique est destiné à être monté.

De façon connue, les pneumatiques pour un véhicule poids lourd sont le plus souvent recreusables. L'usager a en effet la possibilité, après un certain niveau d'usure du pneumatique, de le recreuser, c'est-à-dire d'enlever, généralement manuellement, une certaine épaisseur de matériau caoutchoutique de la bande roulement, radialement vers l'intérieur, à partir du fond des découpures circonférentielles ou transversales de la bande de roulement. Cette opération de recreusage permet de recréer des découpures, en fin de vie du pneumatique, ce qui prolonge l'usage du pneumatique.

Un tel recreusage est toutefois possible si l'épaisseur de matériau caoutchoutique, comprise entre le fond de la découpure la plus profonde de la bande de roulement et l'armature de sommet, est suffisante, typiquement au moins égale à 5 mm. Cette épaisseur de matériau caoutchoutique, radialement intérieure à la découpure la plus profonde, est composée par la superposition d'une épaisseur de portion de bande de roulement et d'une épaisseur de couche intermédiaire. Pour limiter la profondeur de recreusage, usuellement comprise entre 2 et 4 mm, et afin de laisser une épaisseur résiduelle de matériau caoutchoutique suffisante entre le fond de la découpure recreusée et l'armature de sommet, des témoins de recreusage sont généralement mis en place en fond de découpure, pour guider l'usager dans son opération de recreusage, et lui éviter de creuser trop profondément et d'atteindre l'armature de sommet, ce qui serait dommageable à la durée de vie du pneumatique.

Toutefois de nombreux usagers n'utilisent pas cette possibilité de recreusage, ce qui a pour conséquence une exploitation partielle du potentiel d'usure du pneumatique, et donc un coût d'exploitation du pneumatique non optimisé.

Le document WO 2013/150143 A1 divulgue un pneumatique pertinent pour comprendre l'invention.

Les inventeurs se sont donc donnés pour objectif de proposer un pneumatique pour véhicule poids lourd à durée de vie augmentée, sans recourir au recreusage, tout en maintenant un niveau satisfaisant d'endurance du sommet du pneumatique.

L'invention a pour objet un pneumatique pour un véhicule poids lourd comprenant, radialement de l'extérieur vers l'intérieur, une bande de roulement, une couche intermédiaire et une armature de sommet :
- la bande de roulement, destinée à entrer en contact avec un sol par l'intermédiaire d'une surface de roulement, ayant une largeur axiale et comprenant un agencement d'éléments en relief en matériau caoutchoutique et de découpures les séparant,
- la bande de roulement comprenant une portion médiane, ayant une largeur axiale au plus égale à 80% de la largeur axiale de la bande roulement et séparant deux portions latérales,
- la portion médiane comprenant au moins une découpure,
- la au moins une découpure ayant une profondeur, mesurée, perpendiculairement à la surface de roulement, entre la surface de roulement et un fond de découpure,
- la couche intermédiaire, comprenant un matériau caoutchoutique, ayant une épaisseur minimale Ei, mesurée entre le fond de découpure et l'armature de sommet,
- l'armature de sommet comprenant au moins une couche de sommet comprenant des renforts enrobés dans un matériau caoutchoutique,
- la au moins une découpure de la portion médiane ayant une première portion large radialement intérieure, s'étendant, radialement vers l'extérieur, à partir du fond de découpure, sur une hauteur au moins égale à 0.2 fois la profondeur de la découpure, et ayant une largeur moyenne W1 supérieure à 2 mm,
- la au moins une découpure de la portion médiane ayant une deuxième portion étroite, s'étendant, radialement vers l'extérieur, à partir de la première portion radialement intérieure, sur une hauteur au moins égale à 4 mm et au plus égale à la différence entre la profondeur de la découpure et la profondeur de la première portion large, et ayant une largeur moyenne au plus égale à 2 mm,
- l'épaisseur minimale Ei de la couche intermédiaire, mesurée entre le fond de découpure et l'armature de sommet, étant au moins égale à 2 mm et au plus égale à 4 mm
- et l'épaisseur minimale Ei de la couche intermédiaire et la largeur moyenne W1 de la première portion large radialement intérieure de la au moins une découpure de la portion médiane vérifiant la relation : Ei³/W 1<=12 mm², Ei et W1 étant exprimées en mm.

L'invention consiste essentiellement à substituer à une possibilité de recreusage usuelle d'un pneumatique une proposition de profondeur sculpture plus importante, et donc d'épaisseur de bande de roulement plus élevée, en réduisant la quantité de matière disponible entre le fond de découpure et l'armature de sommet à une épaisseur minimale comprise entre 2 et 4 mm, pour permettre une exploitation maximale du pneumatique sans intervention particulière de l'utilisateur.

L'invention propose ainsi, au moins dans la portion médiane de la bande de roulement, des découpures évolutives étagées ayant une profondeur maximisée et comprenant chacune une première portion large, radialement intérieure, et une deuxième portion étroite, radialement extérieure à la première portion large. La première portion large s'étend, radialement vers l'extérieur, à partir du fond de découpure, sur une hauteur au moins égale à 0.2 fois la profondeur de la découpure, et a une largeur moyenne supérieure à 2 mm : c'est donc une portion de type rainure. La deuxième portion étroite s'étend, radialement vers l'extérieur, à partir de la première portion radialement intérieure, sur une hauteur au moins égale à 4 mm et au plus égale à la différence entre la profondeur de la découpure et la profondeur de la première portion large, et a une largeur moyenne au plus égale à 2 mm : c'est donc une portion de type incision pouvant éventuellement, mais non nécessairement, déboucher sur la surface de roulement à l'état neuf.

Une telle découpure évolutive étagée permet ainsi de ne rendre accessible le fond de découpure à des corps étrangers, tels que des cailloux, qu'à partir d'un niveau d'usure avancé de la bande de roulement, en fin de vie du pneumatique. Cet agencement permet ainsi de minimiser les risques d'agression du fond de découpure, et, par conséquent, de fissuration de la couche intermédiaire sous-jacente, pouvant intervenir par suite d'une rétention prolongée de corps étrangers dans la découpure.

Une valeur minimale de l'épaisseur minimale de la couche intermédiaire, mesurée à l'aplomb du fond de découpure, égale à 2 mm, garantit une endurance satisfaisante de l'armature de sommet, car celle-ci n'est pas directement exposée aux risques d'agressions, à usure complète de la bande roulement.

Une valeur maximale de l'épaisseur minimale de la couche intermédiaire, mesurée à l'aplomb du fond de découpure, égale à 4 mm, permet de limiter la contribution de la couche intermédiaire à la masse du pneumatique.

Encore selon l'invention l'épaisseur minimale de la couche intermédiaire et la largeur moyenne de la première portion large radialement intérieure de la au moins une découpure de la portion médiane vérifie la relation : Ei³/W 1<=12 mm², Ei et W1 étant exprimées en mm.

Cette relation définit un domaine de conception optimisé liant l'épaisseur minimale de la couche intermédiaire, mesurée à l'aplomb du fond de découpure, et la largeur moyenne de la première portion large radialement intérieure de la découpure. L'épaisseur minimale de la couche intermédiaire conditionne la protection de l'armature de sommet vis-à-vis des agressions extérieures. La largeur moyenne de la première portion large radialement intérieure définit la largeur de la découpure à usure complète et limite la taille des corps étrangers piégés par la découpure et susceptibles de générer des fissures en fond de découpure.

Selon un mode de réalisation particulier de l'invention, la couche intermédiaire comprend une portion médiane séparant deux portions latérales de ladite couche intermédiaire, ayant une largeur axiale au plus égale à la largeur axiale de la portion médiane de la bande de roulement et comprenant un matériau caoutchoutique de composition chimique différente de celles des matériaux caoutchoutiques des deux portions latérales de ladite couche intermédiaire.

La portion médiane de la couche intermédiaire, positionnée radialement l'intérieur de la portion médiane de la bande de roulement, fonctionne à des températures moins élevées que les portions latérales de la couche intermédiaire, du fait de déformations de cisaillement moins importantes, mais est exposée à des risques d'agressions plus importants, du fait des plus fortes pressions de contact avec le sol. Inversement, les portions latérales de la couche intermédiaire fonctionnent à des températures plus élevées, mais sont moins exposées aux agressions. Il est par conséquent intéressant d'avoir des mélanges caoutchoutiques différenciés entre la portion médiane et les portions latérales de la couche intermédiaire : un matériau caoutchoutique plus hystérétique et plus résistant aux agressions dans la portion médiane de la couche intermédiaire, un matériau caoutchoutique moins hystérétique et moins résistant aux agressions dans les portions latérales de la couche intermédiaire.

Avantageusement la au moins une découpure de la portion médiane a une première portion radialement intérieure, s'étendant, radialement vers l'extérieur, à partir du fond de découpure, sur une hauteur au plus égale à 0.6 fois la profondeur de la découpure.

Au-delà de 0.6 fois la profondeur de la découpure, la hauteur de la deuxième portion étroite, s'étendant, radialement vers l'extérieur, à partir de la première portion radialement intérieure, devient trop faible pour que cette deuxième portion assure la fonction de blocage des éléments de matière en vis-à-vis la délimitant. Ce blocage permet en effet de limiter les déformations de la bande de roulement, ce qui, d'une part, permet de dissiper moins d'énergie et de limiter la résistance au roulement, et, d'autre part, confère à la sculpture une rigidité bénéfique à la tenue de la bande de roulement en usure.

Selon un mode de réalisation particulier, la au moins une découpure de la portion médiane a une troisième portion large radialement extérieure, radialement extérieure à la deuxième portion étroite, débouchant sur la surface de roulement et ayant une largeur, mesurée sur la surface de roulement, au moins égale à 2 mm.

En d'autres termes cette troisième portion radialement la plus extérieure est une rainure. Ainsi la découpure évolutive étagée est constituée, radialement de l'extérieur vers l'intérieur, par des portions respectivement de rainure, d'incision et de rainure. Cet agencement permet de moduler le niveau d'adhérence sur sol mouillé à différents états d'usure de la bande de roulement.

Les caractéristiques de l'invention sont illustrées par les figures 1 à 5 schématiques et non représentées à l'échelle :
- Figure 1 : Demi-coupe méridienne partielle d'un pneumatique selon l'invention, avec une épaisseur minimale réduite de la couche intermédiaire,
- Figure 2 : Vue en coupe transversale d'une découpure de portion médiane d'un pneumatique de l'état de la technique, avec une épaisseur minimale usuelle de la couche intermédiaire,
- Figure 3 : Vue en coupe transversale d'une découpure évolutive étagée de portion médiane d'un pneumatique selon un premier mode de réalisation de l'invention, avec une épaisseur minimale réduite de la couche intermédiaire,
- Figure 4 : Vue en coupe transversale d'une découpure évolutive étagée de portion médiane d'un pneumatique selon un deuxième mode de réalisation de l'invention, avec une épaisseur minimale réduite de la couche intermédiaire,
- Figure 5 : Domaine de conception de l'invention reliant la largeur moyenne de la découpure, en fin d'usure, à l'épaisseur minimale de la couche intermédiaire, à l'aplomb de la découpure.

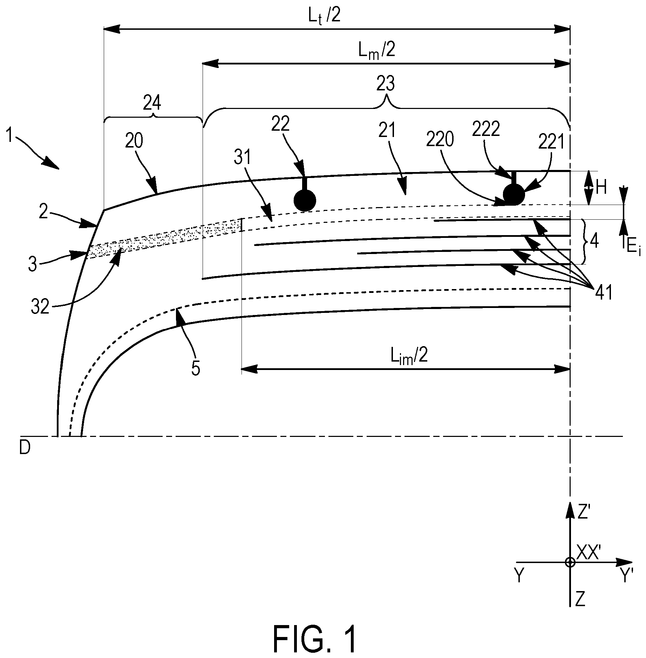

La figure 1 est une demi-coupe méridienne, dans un plan YZ, partielle d'un pneumatique selon l'invention, avec une épaisseur minimale réduite de la couche intermédiaire. Par conséquent, seules des largeurs axiales divisées par 2 sont représentées sur cette figure 1. De même les éléments symétriques par rapport au plan circonférentiel médian XZ du pneumatique ne sont représentés qu'une seule fois. Cette demi-coupe méridienne est partielle car seule la portion radialement extérieure à la droite passant par la plus grande largeur axiale du pneumatique est représentée. Le pneumatique 1 pour un véhicule poids lourd comprend, radialement de l'extérieur vers l'intérieur, une bande de roulement 2, une couche intermédiaire 3 et une armature de sommet 4. La bande de roulement 2, destinée à entrer en contact avec un sol par l'intermédiaire d'une surface de roulement 20, a une largeur axiale Lt et comprend un agencement d'éléments en relief 21 en matériau caoutchoutique et de découpures 22 les séparant. La bande de roulement 2 comprend une portion médiane 23, ayant une largeur axiale Lm au plus égale à 80% de la largeur axiale Lt de la bande roulement 2 et séparant deux portions latérales 24. La portion médiane 23 comprend quatre découpures 22, dont deux seulement sont représentées sur la demi-coupe méridienne de la figure 1. Chaque découpure 22 a une profondeur H, mesurée, perpendiculairement à la surface de roulement 20, entre la surface de roulement 20 et un fond de découpure 220. La couche intermédiaire 3, comprenant un matériau caoutchoutique, a une épaisseur minimale Ei, mesurée entre le fond de découpure 220 et l'armature de sommet 4. Dans le mode de réalisation représenté, la couche intermédiaire 3, ayant une épaisseur Ei sensiblement constante, comprend une portion médiane 31 séparant deux portions latérales 32 de ladite couche intermédiaire 3, ayant une largeur axiale Lim au plus égale à la largeur axiale Lm de la portion médiane 23 de la bande de roulement et comprenant un matériau caoutchoutique de composition chimique différente de celles des matériaux caoutchoutiques des deux portions latérales 32 de ladite couche intermédiaire 3. L'armature de sommet 4 comprend quatre couches de sommet 41 comprenant des renforts enrobés dans un matériau caoutchoutique et est constituée, dans le mode de réalisation représenté, radialement de l'intérieur vers l'extérieur, par une première couche de travail, une couche de frettage, une deuxième couche de travail et une couche de protection. En outre l'armature de sommet est radialement extérieure à une armature de carcasse représentée en pointillés. Conformément à l'invention, chaque découpure 22 de la portion médiane 23 a une première portion large radialement intérieure 221, s'étendant, radialement vers l'extérieur, à partir du fond de découpure 220, et une deuxième portion étroite 222, s'étendant, radialement vers l'extérieur, à partir de la première portion radialement intérieure 221, et l'épaisseur minimale Ei de la couche intermédiaire 3, mesurée entre le fond de découpure 220 et l'armature de sommet 4, est au moins égale à 2 mm et au plus égale à 4 mm.

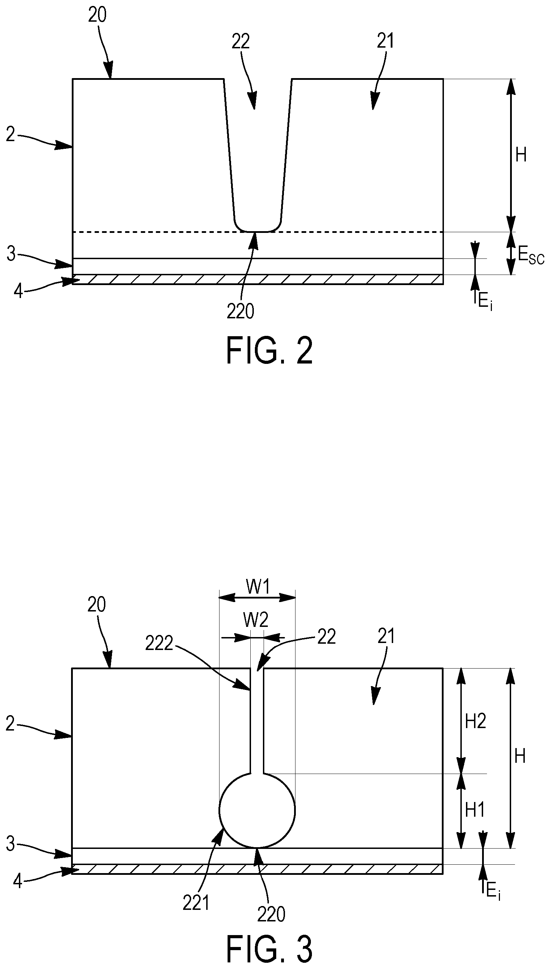

La figure 2 est une vue en coupe transversale d'une découpure d'un pneumatique de l'état de la technique, avec une épaisseur minimale usuelle de la couche intermédiaire. La découpure 22 de portion médiane de la bande de roulement 2, délimitée par deux éléments en relief 21, a une profondeur H, mesurée, perpendiculairement à la surface de roulement 20, entre la surface de roulement 20 et un fond de découpure 220 : c'est une découpure simple formée d'une cavité unique. La couche intermédiaire 3, comprenant un matériau caoutchoutique, a une épaisseur minimale Ei, mesurée entre le fond de découpure 220 et l'armature de sommet 4. Pour un pneumatique de l'état de la technique, l'épaisseur minimale Ei usuelle est généralement au moins égale à 5 mm, pour permettre le recreusage de la bande de roulement lorsque celle-ci arrive à usure complète.

La figure 3 est une vue en coupe transversale d'une découpure évolutive étagée de portion médiane d'un pneumatique selon un premier mode de réalisation de l'invention, avec une épaisseur minimale réduite de la couche intermédiaire. La découpure 22 de portion médiane de la bande de roulement 2, délimitée par deux éléments en relief 21, a une profondeur H, mesurée, perpendiculairement à la surface de roulement 20, entre la surface de roulement 20 et un fond de découpure 220. Selon ce premier mode de réalisation de l'invention, la découpure 22 a une première portion large radialement intérieure 221, s'étendant, radialement vers l'extérieur, à partir du fond de découpure 220, sur une hauteur H1 au moins égale à 0.2 fois la profondeur H de la découpure 22, et ayant une largeur moyenne W1 supérieure à 2 mm. De plus la découpure 22 a une deuxième portion étroite 222, s'étendant, radialement vers l'extérieur, à partir de la première portion radialement intérieure 221, sur une hauteur H2 au moins égale à 4 mm et égale à la différence entre la profondeur H de la découpure 22 et la profondeur H1 de la première portion large 221, et ayant une largeur moyenne W2 au plus égale à 2 mm. Enfin l'épaisseur minimale Ei de la couche intermédiaire 3, mesurée entre le fond de découpure 220 et l'armature de sommet 4, est au moins égale à 2 mm et au plus égale à 4 mm. Ainsi, dans ce premier mode de réalisation de l'invention, la découpure évolutive étagée 22 comprend deux étages : un étage radialement intérieur de type rainure et un étage radialement extérieur de type incision, combinée avec une épaisseur minimale Ei réduite, mesurée entre le fond de découpure 220 et l'armature de sommet 4, au moins égale à 2 mm et au plus égale à 4 mm, ce qui permet, par rapport à l'état de la technique, d'augmenter la profondeur H de la découpure 22, typiquement de 1 mm à 3 mm, donc d'augmenter l'épaisseur de matière à user de 1 mm à 3 mm.

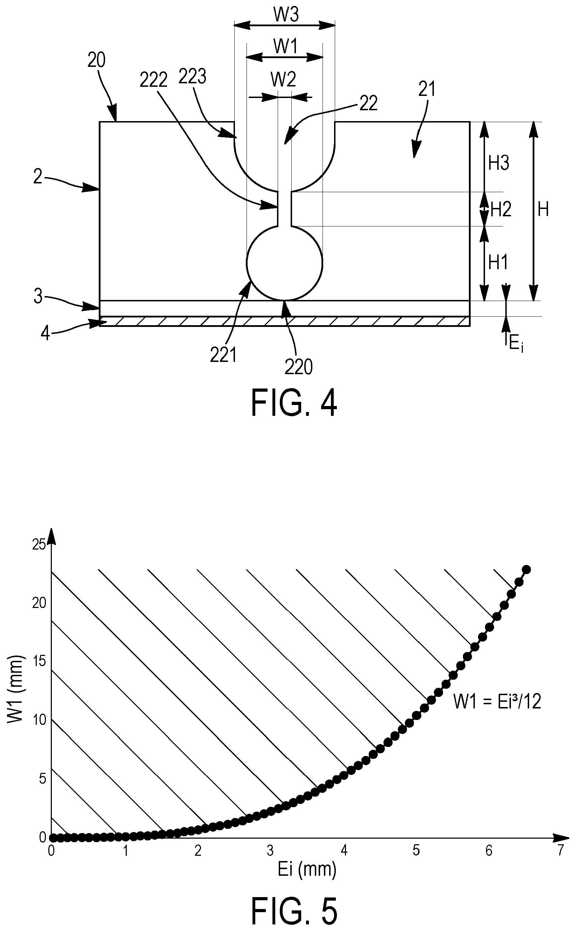

La figure 4 est une vue en coupe transversale d'une découpure évolutive étagée de portion médiane d'un pneumatique selon un deuxième mode de réalisation de l'invention. Ce deuxième mode de réalisation diffère du premier mode de réalisation par une deuxième portion étroite 222, s'étendant, radialement vers l'extérieur, à partir de la première portion radialement intérieure 221, sur une hauteur H2 strictement inférieure à la différence entre la profondeur H de la découpure 22 et la profondeur H1 de la première portion large 221, et par une troisième portion large radialement extérieure 223, radialement extérieure à la deuxième portion étroite 222, débouchant sur la surface de roulement 20 et ayant une largeur W3, mesurée sur la surface de roulement 20, au moins égale à 2 mm. Ainsi, dans ce deuxième mode de réalisation de l'invention, la découpure évolutive étagée 22 comprend trois étages : un étage radialement intérieur de type rainure, un étage radialement intermédiaire de type incision et un étage radialement extérieur de type rainure. Comme précédemment, cette découpure évolutive étagée 22 est combinée avec une épaisseur minimale Ei réduite, mesurée entre le fond de découpure 220 et l'armature de sommet 4, au moins égale à 2 mm et au plus égale à 4 mm.

La figure 5 représente un domaine de conception selon l'invention reliant la largeur moyenne W1 de la découpure 22, en fin d'usure, c'est-à-dire la largeur moyenne W1 de la première portion large 221, à l'épaisseur minimale Ei de la couche intermédiaire 3, à l'aplomb de la découpure 22. Selon l'invention, la relation suivante est vérifiée : Ei³/W 1<=12 mm², Ei et W1 étant exprimées en mm. Le domaine de conception de l'invention est la partie hachurée du graphique.

Les inventeurs ont plus particulièrement étudié cette invention pour un pneumatique de dimension 315/80 R22.5, destiné à équiper un essieu moteur de véhicule poids lourd, et ayant une capacité de charge de 4000 kg pour une pression de gonflage égale à 8.5 bars.

Le tableau 1 ci-dessous présente les caractéristiques d'un pneumatique 315/80 R 22.5 selon l'invention (I), comparées à celles d'un pneumatique de référence de l'état de la technique 315/80 R 22.5 Michelin X MULTI D (R) :

**[Tableau 1]**

| **Caractéristiques** | **I (315/80 R 22.5)** | **R (315/80 R 22.5 Michelin X MULTI D)** | **Commentaires sur les caractéristiques de I** |
|---|---|---|---|
| Largeur axiale Lt de bande de roulement 2 (mm) | 280 mm | 280 mm | |
| Largeur axiale Lm de portion médiane 23 de bande de roulement 2 (mm) | 224 mm | 224 mm | |
| Profondeur H de découpure 22 (mm) | 18.8 mm | 17 mm | H = Hauteur maximale de sculpture |
| Hauteur H1 de première | 7 mm | Sans objet | H1 >= 0.2H = 3.8 |
| portion radialement intérieure 221 (mm) | | | mm |
| Largeur W1 de première portion radialement intérieure 221 (mm) | 6 mm | Sans objet | W1 > 2 mm |
| Hauteur H2 de deuxième portion étroite 222 (mm) | 11.8 mm | Sans objet | H2 = H-H1 >= 4 mm |
| Largeur W2 de deuxième portion étroite 222 | 1.5 mm | Sans objet | W2 <= 2 mm |
| Epaisseur minimale Ei de la couche intermédiaire 3 | 3.2 mm | 5 mm | 2 mm <= Ei <= 4 mm |
| Relation Ei³/W 1 | 5.46 mm2 | 20.8 mm2 | Ei³/W1 <= 12 mm² |

## Revendications

1. Pneumatique (1) pour un véhicule poids lourd comprenant, radialement de l'extérieur vers l'intérieur, une bande de roulement (2), une couche intermédiaire (3) et une armature de sommet (4) :
- la bande de roulement (2), destinée à entrer en contact avec un sol par l'intermédiaire d'une surface de roulement (20), ayant une largeur axiale (Lt) et comprenant un agencement d'éléments en relief (21) en matériau caoutchoutique et de découpures (22) les séparant,
- la bande de roulement (2) comprenant une portion médiane (23), ayant une largeur axiale (Lm) au plus égale à 80% de la largeur axiale (Lt) de la bande roulement (2) et séparant deux portions latérales (24),
- la portion médiane (23) comprenant au moins une découpure (22),
- la au moins une découpure (22) ayant une profondeur (H), mesurée, perpendiculairement à la surface de roulement (20), entre la surface de roulement (20) et un fond de découpure (220),
- la couche intermédiaire (3), comprenant un matériau caoutchoutique, ayant une épaisseur minimale Ei, mesurée entre le fond de découpure (220) et l'armature de sommet (4),
- l'armature de sommet (4) comprenant au moins une couche de sommet (41) comprenant des renforts enrobés dans un matériau caoutchoutique,
la au moins une découpure (22) de la portion médiane (23) ayant une première portion large radialement intérieure (221), s'étendant, radialement vers l'extérieur, à partir du fond de découpure (220), sur une hauteur (H1) au moins égale à 0.2 fois la profondeur (H) de la découpure (22), et ayant une largeur moyenne W1 supérieure à 2 mm, **caractérisé en ce que** la au moins une découpure (22) de la portion médiane (23) a une deuxième portion étroite (222), s'étendant, radialement vers l'extérieur, à partir de la première portion radialement intérieure (221), sur une hauteur (H2) au moins égale à 4 mm et au plus égale à la différence entre la profondeur (H) de la découpure (22) et la profondeur (H1) de la première portion large (221), et ayant une largeur moyenne (W2) au plus égale à 2 mm, **en ce que** l'épaisseur minimale Ei de la couche intermédiaire (3),
mesurée entre le fond de découpure (220) et l'armature de sommet (4), est au moins égale à 2 mm et au plus égale à 4 mm **et en ce que** l'épaisseur minimale Ei de la couche intermédiaire (3) et la largeur moyenne W1 de la première portion large radialement intérieure (221) de la au moins une découpure (22) de la portion médiane (23) vérifie la relation : Ei³/W 1<=12 mm², Ei et W1 étant exprimées en mm.

2. Pneumatique (1) selon la revendication 1, **dans lequel** la couche intermédiaire (3) comprend une portion médiane (31) séparant deux portions latérales (32) de ladite couche intermédiaire (3), ayant une largeur axiale (Lim) au plus égale à la largeur axiale (Lm) de la portion médiane (23) de la bande de roulement et comprenant un matériau caoutchoutique de composition chimique différente de celles des matériaux caoutchoutiques des deux portions latérales (32) de ladite couche intermédiaire (3).

3. Pneumatique (1) selon l'une quelconque des revendications 1 ou 2, **dans lequel** la au moins une découpure (22) de la portion médiane (23) a une première portion radialement intérieure (221), s'étendant, radialement vers l'extérieur, à partir du fond de découpure (220), sur une hauteur (H1) au plus égale à 0.6 fois la profondeur (H) de la découpure (22).

4. Pneumatique (1) selon l'une quelconque des revendications 1 à 3, **dans lequel** la au moins une découpure (22) de la portion médiane (23) a une troisième portion large radialement extérieure (223), radialement extérieure à la deuxième portion étroite (222), débouchant sur la surface de roulement (20) et ayant une largeur (W3), mesurée sur la surface de roulement (20), au moins égale à 2 mm.

## Patentansprüche

1. Reifen (1) für ein Schwerlastfahrzeug, umfassend, radial von außen nach innen, einen Laufstreifen (2), eine Zwischenschicht (3) und eine Scheitelverstärkung (4):
- wobei der Laufstreifen (2), der dazu bestimmt ist, über eine Lauffläche (20) mit einem Boden in Kontakt zu gelangen, eine axiale Breite (Lt) hat und eine Anordnung aus erhabenen Elementen (21) aus Kautschukmaterial und aus sie trennenden Ausschnitten (22) umfasst,
- wobei der Laufstreifen (2) einen mittleren Abschnitt (23) umfasst, der eine axiale Breite (Lm) von höchstens 80 % der axialen Breite (Lt) des Laufstreifens (2) hat und zwei seitliche Abschnitte (24) trennt,
- wobei der mittlere Abschnitt (23) mindestens einen Ausschnitt (22) umfasst,
- wobei der mindestens eine Ausschnitt (22) eine senkrecht zu der Lauffläche (20) zwischen der Lauffläche (20) und einem Ausschnittboden (220) gemessene Tiefe (H) hat,
- wobei die Zwischenschicht (3), die ein Kautschukmaterial umfasst, eine zwischen dem Ausschnittboden (220) und der Scheitelverstärkung (4) gemessene Mindestdicke Ei hat,
- wobei die Scheitelverstärkung (4) mindestens eine Scheitelschicht (41) umfasst, die in ein Kautschukmaterial eingebettete Festigkeitsträger umfasst,
wobei der mindestens eine Ausschnitt (22) des mittleren Abschnitts (23) einen radial inneren breiten ersten Abschnitt (221) umfasst, der sich radial nach außen von dem Ausschnittboden (220) aus über eine Höhe (H1) von mindestens dem 0,2-Fachen der Tiefe (H) des Ausschnitts (22) erstreckt und eine mittlere Breite W1 von mehr als 2 mm hat, **dadurch gekennzeichnet, dass** der mindestens eine Ausschnitt (22) des mittleren Abschnitts (23) einen schmalen zweiten Abschnitt (222) hat, der sich radial nach außen von dem radial inneren ersten Abschnitt (221) aus über eine Höhe (H2) von mindestens 4 mm und höchstens der Differenz zwischen der Tiefe (H) des Ausschnitts (22) und der Tiefe (H1) des breiten ersten Abschnitts (221) erstreckt und eine mittlere Breite (W2) von höchstens 2 mm hat, dass die zwischen dem Ausschnittboden (220) und der Scheitelverstärkung (4) gemessene Mindestdicke Ei der Zwischenschicht (3) mindestens 2 mm und höchstens 4 mm beträgt und dass die Mindestdicke Ei der Zwischenschicht (3) und die mittlere Breite W1 des radial inneren breiten ersten Abschnitts (221) des mindestens einen Ausschnitts (22) des mittleren Abschnitts (23) die folgende Gleichung erfüllt: Ei³/W1<=12 mm², wobei Ei und W1 in mm angegeben werden.

2. Reifen (1) nach Anspruch 1, wobei die Zwischenschicht (3) einen mittleren Abschnitt (31) umfasst, der zwei seitliche Abschnitte (32) der Zwischenschicht (3) trennt und der eine axiale Breite (Lim) von höchstens der axialen Breite (Lm) des mittleren Abschnitts (23) des Laufstreifens hat und ein Kautschukmaterial mit einer anderen chemischen Zusammensetzung als denjenigen der Kautschukmaterialien der beiden seitlichen Abschnitte (32) der Zwischenschicht (3) umfasst.

3. Reifen (1) nach einem der Ansprüche 1 oder 2, wobei der mindestens eine Ausschnitt (22) des mittleren Abschnitts (23) einen radial inneren ersten Abschnitt (221) hat, der sich radial nach außen von dem Ausschnittboden (220) aus über eine Höhe (H1) von höchstens dem 0,6-Fachen der Tiefe (H) des Ausschnitts (22) erstreckt.

4. Reifen (1) nach einem der Ansprüche 1 bis 3, wobei der mindestens eine Ausschnitt (22) des mittleren Abschnitts (23) einen radial äußeren breiten dritten Abschnitt (223) hat, der sich radial außerhalb des schmalen zweiten Abschnitts (222) erstreckt, auf der Lauffläche (20) mündet und eine auf der Lauffläche (20) gemessene Breite (W3) von mindestens 2 mm hat.

## Claims

1. Tyre (1) for a heavy-duty vehicle comprising, radially from the outside toward the inside, a tread (2), an intermediate layer (3) and a crown reinforcement (4):
- the tread (2), intended to come into contact with the ground via a tread surface (20), having an axial width (Lt) and comprising an arrangement of raised elements (21) made of rubber material and cuts (22) separating them,
- the tread (2) comprising a median portion (23) having an axial width (Lm) at most equal to 80% of the axial width (Lt) of the tread (2) and separating two lateral portions (24),
- the median portion (23) comprising at least one cut (22),
- the at least one cut (22) having a depth (H), measured perpendicular to the tread surface (20), between the tread surface (20) and a bottom (220) of the cut,
- the intermediate layer (3), comprising a rubber material, having a minimum thickness Ei, measured between the bottom (220) of the cut and the crown reinforcement (4),
- the crown reinforcement (4) comprising at least one crown layer (41) comprising reinforcers embedded in a rubber material,
- the at least one cut (22) of the median portion (23) having a wide radially inner first portion (221) extending radially outwards from the bottom (220) of the cut, over a height (H1) at least equal to 0.2 times the depth (H) of the cut (22), and having a mean width W1 greater than 2 mm,
**characterized in that** the at least one cut (22) of the median portion (23) has a narrow second portion (222), extending radially outwards from the radially inner first portion (221) over a height (H2) at least equal to 4 mm and at most equal to the difference between the depth (H) of the cut (22) and the depth (H1) of the wide first portion (221), and having a mean width (W2) at most equal to 2 mm, **in that** the minimum thickness Ei of the intermediate layer (3), measured between the bottom (220) of the cut and the crown reinforcement (4), is at least equal to 2 mm and at most equal to 4 mm **and in that** the minimum thickness Ei of the intermediate layer (3) and the mean width W1 of the wide radially inner first portion (221) of the at least one cut (22) of the median portion (23) satisfy the relationship: Ei³/W1<=12 mm², Ei and W1 being expressed in mm.

2. Tyre (1) according to Claim 1, **wherein** the intermediate layer (3) comprises a median portion (31) separating two lateral portions (32) of said intermediate layer (3), having an axial width (Lim) at most equal to the axial width (Lm) of the median portion (23) of the tread and comprising a rubber material of different chemical composition from those of the rubber materials of the two lateral portions (32) of said intermediate layer (3).

3. Tyre (1) according to either one of Claims 1 or 2, **wherein** the at least one cut (22) of the median portion (23) has a radially inner first portion (221) extending radially outwards from the bottom (220) of the cut, over a height (HI) at most equal to 0.6 times the depth (H) of the cut (22).

4. Tyre (1) according to any one of Claims 1 to 3, **wherein** the at least one cut (22) of the median portion (23) has a wide radially outer third portion (223), radially to the outside of the narrow second portion (222), opening onto the tread surface (20) and having a width (W3), measured on the tread surface (20), at least equal to 2 mm.
